# EUROPÄISCHE PATENTANMELDUNG

(11) **EP 4 369 490 A1**
(43) Veröffentlichungstag der Anmeldung: **15.05.2024**
(21) Anmeldenummer: 23201843.2
(22) Anmeldetag: 05.10.2023
(51) Int. Cl.: H01M 50/249, B60K 1/04, B60L 50/64, H01M 50/264

(54) **BATTERIEZELLE FÜR EIN KRAFTFAHRZEUG, SYSTEM AUS BATTERIEZELLE UND MONTAGEVORRICHTUNG SOWIE VERFAHREN ZUR HERSTELLUNG EINER BATTERIEZELLE**

(30) Priorität: 10.11.2022 DE 102022211930
(71) Anmelder: VOLKSWAGEN AG, 38440 Wolfsburg (DE)
(72) Erfinder: Abel, Tobias, 38114 Braunschweig (DE)

(57) **Zusammenfassung**

Die Erfindung betrifft eine Batteriezelle für ein Kraftfahrzeug, umfassend ein Batteriezellgehäuse (12) mit einer Einschuböffnung (14) und mindestens einem in das Batteriezellgehäuse (12) einzuschiebenden Zellstapel (16), wobei an mindestens einer Außenseite (18, 20) des Zellstapels (16) Antriebs-Kupplungsstrukturen (28) in Form von sich quer zur Einschubrichtung erstreckenden Erhöhungen und/oder Vertiefungen (30) ausgebildet sind. Ferner betrifft die Erfindung ein System aus einer Montagevorrichtung (40) mit mindestens einer Antriebswalze (38) zum Einführen eines Zellstapels (16) in ein Batteriezellgehäuse (12) einer Batteriezelle (10) nach einem der vorstehenden Ansprüche, wobei die Antriebswalze (38) über den Umfang verteilt Walzen-Kupplungsstrukturen (34) aufweist, die komplementär zu den Kupplungsstrukturen (28) an dem Batteriezellenpaket (16) ausgebildet sind sowie ein Verfahren zum Einführen eines Zellstapels (16)

## Beschreibung

Die Erfindung betrifft eine Batteriezelle für ein Kraftfahrzeug, ein System aus Batteriezelle und Montagevorrichtung sowie ein Verfahren zum Einführen eines Batteriezellenpaketes in ein Batteriezellgehäuse.

Aus DE 10 2019 109 715 A1 sind ein Batteriemodul für ein Kraftfahrzeug sowie ein Verfahren zu dessen Herstellung bekannt. Das Batteriemodul umfasst ein Batteriemodulgehäuse mit einer Einschuböffnung und mindestens ein Batteriezellenpaket. Das Batteriezellenpaket weist mindestens zwei parallel zueinander angeordnete Batteriezellen und mindestens ein parallel zu den Batteriezellen angeordnetes Kompressionspad auf. Das Batteriezellenpaket weist ferner mindestens zwei Einschiebehilfsschichten auf, welche jeweils in Dickenrichtung gegenüberliegende Außenseiten des Zellstapels bilden. Gemäß dem Verfahren wird das Batteriezellenpaket in Dickenrichtung mittels zylindrischer Rollen komprimiert und in das Batteriemodulgehäuse eingeschoben. Einzelheiten zum Aufbau der in den Batteriemodulen verbauten Batteriezellen sowie zu deren Herstellung sind nicht offenbart.

Die Erfindung betrifft Batteriezellen, welche konstruktiv analog zu den vorstehend beschriebenen Batteriemodulen aufgebaut sein können, wobei die dargestellten Batteriezellen dann einzelne Zellstapel sind, welche jeweils aus Anode, Katode und Separator gebildet sind. Ein Kompressionspad ist für die erfindungsgemäßen Batteriezellen nicht zwingend erforderlich. Die Erfindung befasst sich insbesondere mit dem Einschieben von Zellstapeln, die in Einführrichtung aus dem Batteriezellenpaket herausragende Ableiterfähnchen aufweisen oder aus anderen Gründen auf der der Einschubvorderseite gegenüberliegenden Einschubrückseite möglichst keine Druckbelastung erfahren sollen. Die Batteriezellenpakete lassen sich mit dem aus dem oben genannten Stand der Technik beschriebenen Verfahren nicht vollständig in das Batteriezellgehäuse einschieben bzw. das Nachschieben ist mit dem Risiko verbunden, dass das Batteriezellenpaket oder ein aus dem Batteriezellenpaket herausragendes Element, wie z.B. ein Ableiterfähnchen, durch Druckbelastung auf die Einschubrückseite beim Einschieben des Zellstapels beschädigt wird.

Der Erfindung liegt die Aufgabe zugrunde, eine Batteriezelle für ein Kraftfahrzeug, ein System aus einer Batteriezelle und einer Montagevorrichtung sowie ein Verfahren zum Einführen eines Batteriezellenpaketes in ein Batteriezellgehäuse herzustellen, mittels welchen ein sicheres Einführen des Zellstapels in das Batteriezellgehäuse ermöglicht wird.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Batteriezelle für ein Kraftfahrzeug umfasst ein Batteriezellgehäuse mit einer Einschuböffnung und mindestens ein in das Batteriegehäuse einzuschiebendes Batteriezellenpaket. Ein Batteriezellenpaket im Sinne der Erfindung kann nur aus einer einzelnen Batteriezelle bestehen. Vorzugsweise ist mit einem Batteriezellenpaket im Sinne der Erfindung jedoch ein Stapel von mindestens zwei Batteriezellen gemeint, die parallel zueinander angeordnet sind und damit einen Zellstapel bilden. Bei einer erfindungsgemäßen Batteriezelle sind an mindestens einer Außenseite des Zellstapels Antriebskupplungsstrukturen in Form von sich quer zur Einschubrichtung erstreckenden Erhöhungen und/oder Vertiefungen ausgebildet. Damit sind insbesondere kreisförmige oder polygonförmige Öffnungen oder Noppen gemeint. Als Kupplungsstrukturen im Sinne der Erfindung werden jedoch auch rillenartige Vertiefungen oder rippenartige, aus dem Batteriezellenpaket herausragende Strukturen verstanden. Kupplungsstrukturen sind ferner alle weiteren Strukturen, welche dazu geeignet sind, in Verbindung mit einer Antriebswalze, welche komplementäre Walzen-Kupplungsstrukturen aufweist, einen formschlüssigen Antrieb des Zellstapels zum Einschieben in das Batteriezellgehäuse ermöglicht. Wie nachfolgend noch in Verbindung mit den abhängigen Ansprüchen erläutert wird, ermöglicht es eine erfindungsgemäße Batteriezelle, ein Batteriezellenpaket unabhängig von seiner Gestaltung im Bereich der Einschubvorderseite und Einschubrückseite sicher und ohne Schädigung der Einschubvorder- und Einschubrückseite in ein Batteriezellgehäuse einzuführen.

In einer praktischen Ausführungsform einer erfindungsgemäßen Batteriezelle ist an dem Batteriezellenpaket außenseitig mindestens eine Einschiebehilfsschicht ausgebildet, wobei die Kupplungsstrukturen an der mindestens einen Einschiebehilfsschicht ausgebildet sind. Vorzugsweise sind zwei Einschiebehilfsschichten auf zwei gegenüberliegenden Außenseiten des Zellstapels vorgesehen. Die Ausbildung von Kupplungsstrukturen an einer oder mehreren Einschiebehilfsschichten hat den Vorteil, dass die Herstellung der Einschiebehilfsschichten separat erfolgen kann und die Einschiebehilfsschichten erst kurz vor dem Einführen in das Batteriezellgehäuse mit dem Batteriezellenpaket verbunden werden können. Ferner besteht in diesem Fall nicht die Gefahr, dass beim Ausbilden von Kupplungsstrukturen, insbesondere Vertiefungen oder Erhöhungen, das Batteriezellenpaket beschädigt wird. Das Verbinden einer Einschiebehilfsschicht kann auch auf einfache Art und Weise erfolgen, insbesondere durch Verkleben, Laminieren, Pfalzen, Bördeln oder auf andere geeignete Art und Weise.

In einer weiteren praktischen Ausführungsform der erfindungsgemäßen Batteriezelle ist die mindestens eine Einschiebehilfsschicht als Führungsschiene ausgebildet, die fest mit dem Batteriezellenpaket verbunden ist. Unter einer Führungsschiene wird in diesem Zusammenhang insbesondere ein im wesentlichen formstabiles Element verstanden, das zwar biegeelastisch sein kann, jedoch eine ausreichende Eigensteifigkeit aufweist, um den nachfolgend noch erläuterten Funktionen Rechnung tragen zu können. Als Material für die Führungsschiene geeignet ist insbesondere Kunststoff, vorzugsweise ein thermoplastischer Kunststoff. Die Führungsschienen können jedoch auch aus einem beliebigen anderen Werkstoff hergestellt sein. Das Vorstehende hinsichtlich der Einschiebehilfsschicht, insbesondere die vorzugsweise Anordnung auf zwei gegenüberliegenden Außenseiten des Zellstapels, gilt analog auch für als Führungsschiene ausgebildete Einschiebehilfsschichten.

In einer weiteren praktischen Ausführungsform einer erfindungsgemäßen Batteriezelle weist die mindestens eine Führungsschiene auf der Einschubrückseite gegenüber der Länge des Zellstapels einen Überstand auf. Unter der Länge des Zellstapels wird in diesem Zusammenhang das rückseitige Ende der Batteriezellen selbst verstanden. Nicht zu der Länge des Zellstapels zählen etwaige Ableiterfähnchen, welche gegenüber den Batteriezellen in Einschubrichtung nach hinten herausragen. Der Überstand der mindestens einen Führungsschiene gegenüber dem Batteriezellenpaket wird vorzugsweise mindestens so groß gewählt wie etwaige gegenüber dem Batteriezellenpaket in Einschubrichtung hervorstehende Elemente, insbesondere Ableiterfähnchen. Dies hat den Vorteil, dass die herausragenden Elemente von den Führungsschienen geschützt werden, insbesondere wenn eine großflächige Kraft von der Einschubrückseite her auf das Batteriezellenpaket einwirkt.

In einer weiteren praktischen Ausführungsform einer erfindungsgemäßen Batteriezelle ist an der Führungsschiene eine Sollbruchstelle ausgebildet. Eine derartige Sollbruchstelle kann genutzt werden, um nach dem vollständigen Einführen eines Zellstapels in das Batteriezellgehäuse den dann nicht mehr erforderlichen Überstand einer Führungsschiene abzutrennen und von dem Batteriezellenpaket zu entfernen.

In einer weiteren praktischen Ausführungsform einer erfindungsgemäßen Batteriezelle sind als Kupplungsstrukturen eine Vielzahl von Öffnungen ausgebildet, die in Einschubrichtung betrachtet in regelmäßigen Abständen angeordnet sind. Dies ermöglicht es, Batteriezellenmodule mit Hilfe einer Antriebswalze anzutreiben, welche in regelmäßigen Abständen entsprechende Walzen-Kupplungsstrukturen aufweist.

Wenn eine erste Öffnung im Bereich der Einschubvorderseite als Langloch ausgebildet ist oder die Öffnungen einer ersten Reihe im Bereich der Einschubvorderseite als Langlöcher ausgebildet sind, kann zum ersten Ankoppeln eines Zellstapels an eine Antriebswalze einer Montagevorrichtung ein Toleranzausgleich mit Hilfe der Langlöcher bereitgestellt werden. Dies erhöht die Ausfallsicherheit und damit die Funktionssicherheit bei der Montage einer erfindungsgemäßen Batteriezelle.

Weitere Vorteile ergeben sich, wenn das eine Langloch oder die mehreren Langlöcher einen aufgeweiteten Kopplungsbereich mit vergrößerter Öffnung in einem Teilbereich, insbesondere einem Anfangsbereich, aufweist und die Öffnung in Richtung eines Endbereichs sich verjüngend ausgebildet ist. In diesem Fall können auch größere Längen- und/oder Breitenabweichungen in der Relativposition zwischen einer Antriebswalze und der korrespondierenden Außenseite des Zellstapels, insbesondere einer Einschiebehilfsschicht mit Vertiefungen, beim Erstkontakt zwischen den Kupplungsstrukturen der Antriebswalze, insbesondere in Form von Noppen, und den Öffnungen in der Außenseite des Zellstapels während des ersten Eingreifens der Noppen in ein Batteriezellenpaket bzw. eine Einschiebehilfsschicht eines Zellstapels ausgeglichen werden. Denn es besteht dann die Möglichkeit, dass der oder die Noppen in den Teilbereich mit vergrößerter Öffnung eintaucht und anschließend durch Relativbewegung des Noppens innerhalb der Öffnung eine Soll-Relativposition zwischen Antriebswalze und Batteriezellenpaket zwangsweise durch die Geometrie der Öffnung erzeugt wird. Die Öffnung/Öffnungen der ersten Reihe im Bereich der Einschubvorderseite dienen in diesem Fall als optimiertes Zentrier- und Relativpositionierungsmittel zwischen Antriebswalze und Batteriezellenpaket.

Die Erfindung betrifft auch ein System aus einer Montagevorrichtung mit mindestens einer Antriebswalze zum Einführen eines Zellstapels in ein Batteriezellgehäuse einer wie vorstehend beschriebenen Batteriezelle. Dabei weist die Antriebswalze über den Umfang verteilt Walzen-Kupplungsstrukturen auf, die komplementär zu den Kupplungsstrukturen an dem Batteriezellenpaket ausgebildet sind. Unter einer Antriebswalze im Sinne eines erfindungsgemäßen Systems wird insbesondere eine zylindrische Antriebswalze verstanden, welche als Walzen-, Kupplungsstrukturen radial aus der Walze herausragende Noppen aufweist.

In einer praktischen Ausführungsform eines erfindungsgemäßen Systems sind die Walzen-Kupplungsstrukturen derart aus der Antriebswalze herausfahrbar angeordnet, dass mittels eines geeigneten Kupplungsstruktur-Antriebs das Herausfahren der Walzen-Kupplungsstrukturen abhängig von der jeweiligen Stellung der Antriebswalze steuerbar ist. Der Kupplungsstrukturantrieb kann insbesondere pneumatisch, hydraulisch und/oder elektrisch angetrieben sein.

In einer weiteren praktischen Ausführungsform eines erfindungsgemäßen Systems weist der Kupplungsstruktur-Antrieb zwei Ausfahrstellungen auf, insbesondere eine erste Ausfahrstellung zum Zusammenwirken mit den an dem Batteriezellenpaket ausgebildeten Kupplungsstrukturen und eine zweite Ausfahrstellung zum Abtrennen eines Überstandes einer Führungsschiene, insbesondere einer Führungsschiene, an welcher eine Sollbruchstelle ausgebildet ist.

Die Erfindung betrifft auch ein Verfahren zum Einführen eines Zellstapels in ein wie vorstehend beschriebenes Batteriezellgehäuse mit Hilfe einer Montagevorrichtung, die eine rotierbar gelagerte Antriebswalze mit Walzen-Kupplungsstrukturen aufweist. Dabei wirken die Walzen-Kupplungsstrukturen mit an dem Batteriezellenpaket ausgebildeten Kupplungsstrukturen beim Rotieren der Antriebswalze derart zusammen, dass das Batteriezellenpaket formschlüssig in das Batteriezellgehäuse eingeschoben wird. Auf die vorstehend bereits in Verbindung mit der erfindungsgemäßen Batteriezelle beschriebenen Vorteile wird hiermit verwiesen.

Weitere praktische Ausführungsformen der Erfindung sind nachfolgend im Zusammenhang mit den Zeichnungen beschrieben. Es zeigen:
- Fig. 1: eine erfindungsgemäße Batteriezelle mit Batteriezellgehäuse und einem in das Batteriezellgehäuse einzuschiebenden Batteriezellenpaket vor der Montage in einer Ansicht von der Seite,
- Fig. 2: die Batteriezelle aus Fig. 1 vor der Montage in einer Draufsicht,
- Fig. 3: eine alternative Ausführungsform eines Zellstapels einer erfindungsgemäßen Batteriezelle in einer Ansicht von der Seite mit rückseitigem Überstand einer Führungsschiene und mit optimierten Zentriermitteln im Bereich der Einschubvorderseite,
- Fig. 4a: die Führungsschiene des in Fig. 3 dargestellten Batteriezellenpaket in einer Seitenansicht vor dem Abtrennen des Überstands,
- Fig. 4b: die Führungsschienen aus Fig. 4a nach dem Abtrennen des Überstands im Bereich der Sollbruchstelle,
- Fig. 5: eine Antriebswalze mit Walzen-Kupplungsstrukturen in Form von herausfahrbaren Noppen und pneumatischem oder hydraulischem Antrieb,
- Fig. 6: eine Detaildarstellung eines einzelnen Noppens, der in Fig. 5 gezeigten Antriebswalze und
- Fig. 7: eine alternative Gestaltung einer Antriebswalze analog zu der in Fig. 5 gezeigten Antriebswalze mit einem elektromagnetischen Antrieb.

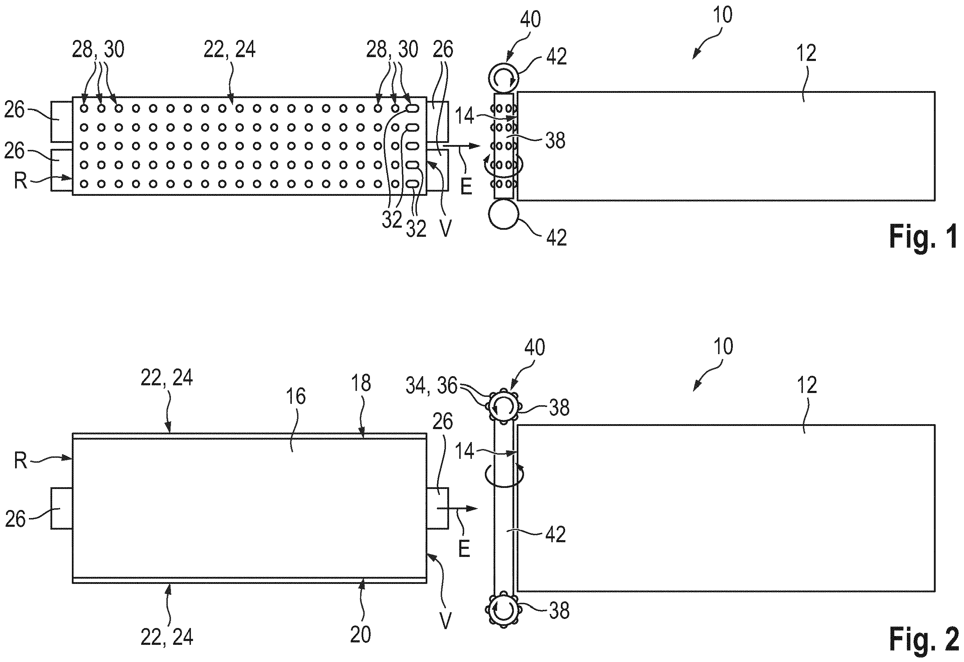

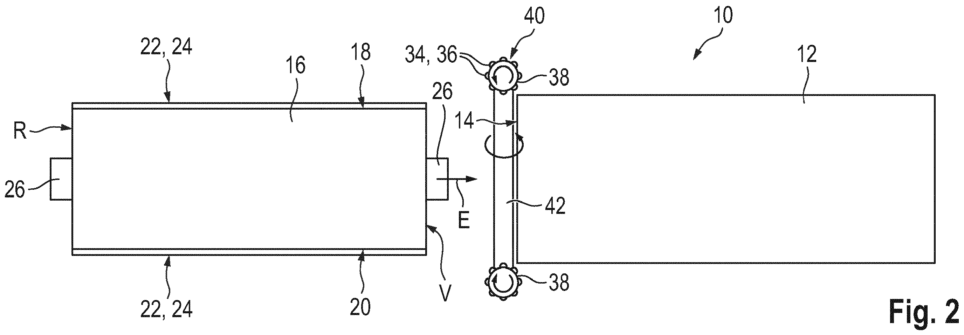

In den Figuren 1 und 2 ist eine noch nicht montierte Batteriezelle 10 in einer Ansicht von oben (Figur 1) und in einer Seitenansicht (Figur 2) gezeigt. Die Batteriezelle 10 umfasst ein Batteriezellgehäuse 12 mit einer Einschuböffnung 14. Ferner umfasst die Batteriezelle 10 ein Batteriezellenpaket 16, welches in Figur 2 vereinfacht als Rechteck dargestellt ist. In der gezeigten Ausführungsform sind an zwei gegenüberliegenden Außenseiten 18, 20 des Zellstapels 16 Einschiebehilfsschichten 22 in Form von Führungsschienen 24 ausgebildet. Diese erstrecken sich in der in den Figuren 1 und 2 gezeigten Ausführungsform über die gesamte Länge des Zellstapels 16. Ziel ist es, das Batteriezellenpaket 16 sicher in das Batteriezellgehäuse 12 in Einführrichtung E einzuführen.

Wie in den Figuren 1 und 2 erkennbar ist, weist das Batteriezellenpaket 16 sowohl im Bereich der Einschubvorderseite V als auch im Bereich der Einschubrückseite R in Einschubrichtung herausragende Ableiterfähnchen 26 auf. Würde die Einschubrückseite R mit einer Einschubkraft beaufschlagt, um das Batteriezellenpaket 16 in das Batteriezellgehäuse 12 einzuschieben, bestünde die Gefahr, dass die Ableiterfähnchen 26 im Bereich der Einschubrückseite R beschädigt werden.

Wie in Figur 1 gut erkennbar ist, sind auf der Führungsschiene 24 eine Vielzahl von Kupplungsstrukturen 28 in Form von runden Öffnungen 30 ausgebildet. Die Öffnungen 30 sind überwiegend kreisförmig ausgebildet und in Reihen von mehreren, hier beispielhaft fünf Öffnungen 30 angeordnet. Die von der Einschubvorderseite V aus vorderste Reihe von Öffnungen 30 ist nicht kreisförmig ausgebildet, sondern weist Langlöcher 32 aus.

Die außenseitig an den Führungsschienen 24 ausgebildeten Kupplungsstrukturen 28 ermöglichen ein Zusammenwirken mit Walzen-Kupplungsstrukturen 34 in Form von Noppen 36, die an Antriebswalzen 38 einer Montagevorrichtung 40 ausgebildet sind.

Es wird explizit darauf hingewiesen, dass alternativ zu den dargestellten Noppen 36 als Walzen-Kupplungsstrukturen 34 auch schneckenförmige Antriebskupplungen vorgesehen sein können. Darunter sind insbesondere Strukturen zu verstehen, die von einer angetriebenen Welle mittels Schneckenzahnrads in Rillen auf der Führungsschiene greifen. Solche Strukturen sind in den Figuren nicht dargestellt.

Wie in Figur 2 gut erkennbar ist, sind die als Walzen-Kupplungsstrukturen 34 dienenden Noppen 36 derart aus der jeweiligen Antriebswalze 38 heraufahrbar angeordnet, dass das Herausfahren der Walzen-Kupplungsstrukturen 34 abhängig von der jeweiligen Stellung der Antriebswalze 38 steuerbar ist. In dem in den Figuren 1 und 2 gezeigten Ausführungsbeispiel sind die Noppen 36 in den Umfangsabschnitt aus der Antriebswalze 38 herausgefahren, in welchem die Noppen 36 nicht mit dem Batteriezellgehäuse 12 kollidieren. Dies ermöglicht es, dass die Noppen 36 in die an den Führungsschienen 24 ausgebildeten Öffnungen 30 eingreifen, um eine formschlüssige Verbindung zwischen der jeweiligen Antriebswalze 38 und der Führungsschiene 24 herzustellen und so durch Rotieren der Antriebswalzen 38 in Richtung der Pfeile P des Zellstapels 16 in die Einschuböffnungen 14 des Batteriezellgehäuses 12 einzuschieben.

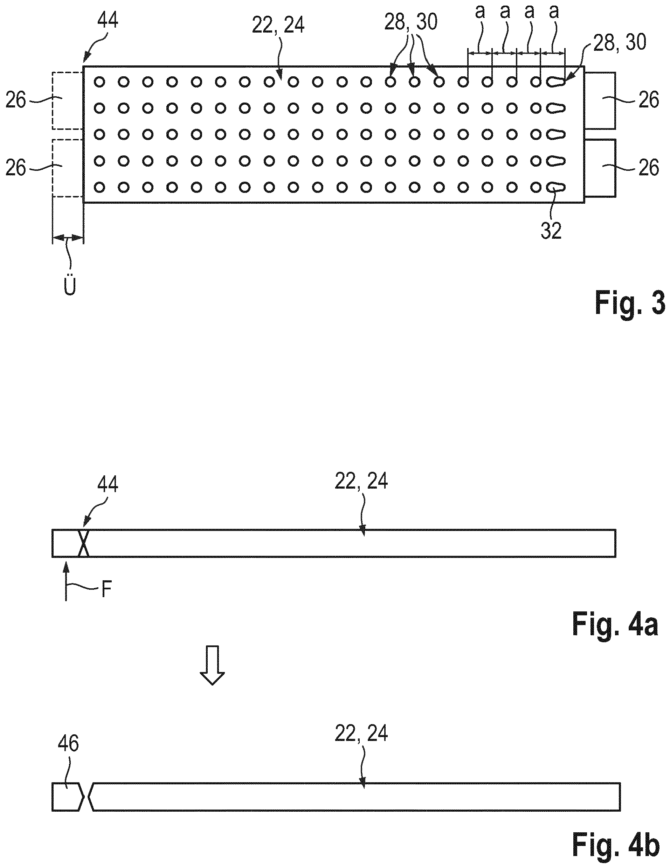

Figur 3 zeigt eine alternative Ausführungsform eines Zellstapels 16, bei welchem eine Führungsschiene 24 mit einem Überstand Ü zum Einsatz kommt. Der Überstand Ü ist größer gewählt als die sich in Einführrichtung E erstreckende Länge der Ableiterfähnchen 26, welche in Figur 3 von der Führungsschiene 24 verdeckt und daher gestrichelt dargestellt sind. Aufgrund des Überstands Ü sind die Ableiterfähnchen 26 daher vor der Einwirkung von auf die Einschubrückseite R einwirkenden Kräften geschützt, da solche Kräfte von den Führungsschienen 24 aufgenommen würden.

In Figur 3 ist auch dargestellt, dass der Abstand der einzelnen Reihen von Öffnungen 30 jeweils a beträgt und von Reihe zu Reihe jeweils gleich groß ist. Dies gilt auch für den Abstand von der ersten Reihe mit den Langlöchern 32 zur zweiten Reihe, ab welcher die Öffnungen 30 kreisförmig ausgebildet sind.

Bei der in Figur 3 gezeigten Ausführungsform sind die Öffnungen 30 als schlüssellochförmige Langlöcher 32 ausgebildet. Dabei ist das linksseitige Ende als Teilbereich mit vergrößerter Öffnung ausgebildet, und das rechtsseitige Ende ist so dimensioniert wie die jeweils rechte Hälfte aller übrigen Öffnungen 30.

Bei der in Figur 3 gezeigten Ausführungsform der Führungsschiene 24 ist ferner im Bereich der Einschubrückseite R eine Sollbruchstelle 44 ungefähr dort ausgebildet, wo das Batteriezellenpaket 16 ohne Berücksichtigung der Ableiterfähnchen 26 endet.

In den Figuren 4a und 4b ist die Sollbruchstelle 44 gut erkennbar. Dabei zeigt Figur 4a die Führungsschiene 24 vor dem Abtrennen und dem Einwirken einer Kraft F auf den endseitigen Abschnitt der Führungsschiene 24. Figur 4b zeigt die Führungsschiene 24 nach dem Abtrennen eines Endabschnitts 46 der Führungsschiene 24.

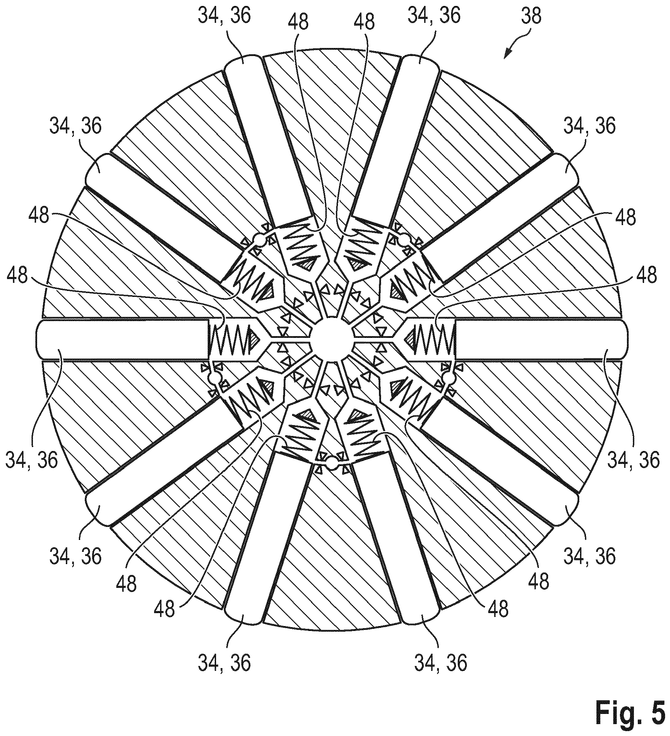

Figur 5 zeigt ein Ausführungsbeispiel einer Antriebswalze 38. In der gezeigten Ausführungsform umfasst die Antriebswalze 38 insgesamt zehn radial aus der Antriebswalze 38 herausfahrbare Walzen-Kupplungsstrukturen 34 in Form von Noppen 36. Die Noppen 36 sind gleichmäßig über den Umfang verteilt. In der gezeigten Ausführungsform ist radial innenseitig jedes Noppen 36 jeweils eine Feder 48 im relaxierten Zustand angeordnet, wobei ein Ende der Feder 48 fest mit dem jeweiligen radialen Ende des Noppen 36 verbunden ist.

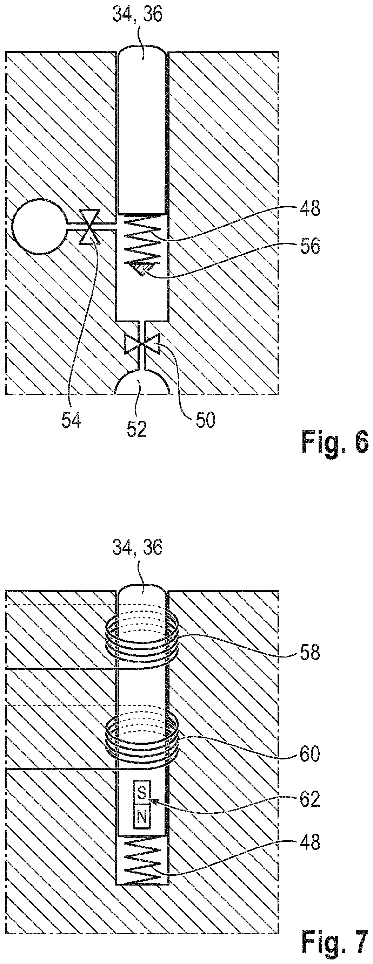

Der Antrieb der jeweiligen Noppen 36 wird am Beispiel eines Noppens 36 mit Hilfe der Figur 6 nachfolgend beschrieben. Zum Ausfahren des in Figur 6 gezeigten Noppens 36 wird durch Ansteuerung eines elektronisch gesteuerten Einlassventils 50 Druck aus einem Überdruck-Fluidreservoir 52 in Richtung des radial inneren Endes des Noppens 36 freigegeben. Dadurch fährt der Noppen 36 radial aus der Antriebswalze 38 heraus. Über ein elektronisch gesteuertes Auslassventil 54 kann der radial innenseitig auf den Nocken 36 wirkende Druck wieder abgelassen werden, um den Nocken 36 durch Einwirkung der Feder 48 wieder in die eingefahrene, in Figur 6 gezeigte Stellung zurück zu verfahren. Dazu ist die Feder 48 radial innenseitig an einem geeigneten Element 56 mechanisch angebunden, um durch das Ausfahren des Noppens 36 die Feder 48 zu spannen.

Figur 7 zeigt eine alternative Ausführungsform für Noppen 36 einer Antriebswalze 38. Bei dieser Ausführungsform ist radial außenseitig eine erste Spule 58 vorgesehen und radial weiter innenseitig eine zweite Spule 60 vorgesehen. Ferner ist ein Dauermagnet 62 in den Noppen 36 integriert bzw. fest mit diesem verbunden. Eine radial innenseitig des Noppens 36 angeordnete Feder 48, die wiederum radial innenseitig fest mit der Antriebswalze 38 verbunden ist und radial außenseitig fest mit dem radial in seitigen Ende des Noppens 36 verbunden ist, ist auch bei dieser Ausführungsform vorgesehen.

Durch Ansteuerung der radial außenseitigen Spule 58 kann der jeweilige Noppen 36 in eine erste Stellung ausgefahren werden, welche dazu dient, mit in Führungsschienen 24 ausgebildeten Öffnungen 30 zusammen zu wirken, um ein Batteriezellgehäuse 12 einzuschieben.

Durch Ansteuerung der radial innenseitig angeordneten Spule 60 kann der jeweilige Noppen 36 in eine weiter ausgefahrene Erstellung verfahren werden, insbesondere um einen Endabschnitt 46 einer Führungsschiene 24, welche beispielsweise wie in den Figuren 4a und 4b gezeigt eine Sollbruchstelle 44 aufweist, abzutrennen, nachdem das entsprechende Batteriezellenpaket 16 vollständig in das Batteriezellgehäuse 12 eingeschoben wurde.

Der Vollständigkeit halber wird noch darauf hingewiesen, dass in den Figuren 1 und 2 Zusatz-Antriebswalzen 42 vorgesehen sind, die optional an einer Montagevorrichtung 40 ausgebildet sein können, um auch auf den nicht mit Führungsschienen 24 versehenen Flächen des Zellstapels 16 zusätzliche Einschiebekräfte auszuüben bzw. eine seitliche Positionierung des Zellstapels 16 relativ zu dem Batteriezellgehäuse 12 sicherzustellen. Anstelle dieser zusätzlichen Antriebswalzen 42 können auch trichterartige Positioniervorrichtungen vorgesehen sein, da mit dem formschlüssigen Antrieb durch die Noppen 36 der beiden Antriebswalzen 38 bereits eine ausreichend große, formschlüssige Kraftübertragung für das Einschieben in das Batteriezellgehäuse 12 erzeugt wird.

Zudem können Seiten- und Oberflächen in einer weiteren Ausführungsform getauscht werden, sodass sich Figur 1 auf die Draufsicht und Figur 2 auf eine Seitenansicht bezieht.

Bei einer wie in Figur 1 gezeigten Gestaltung der Langlöcher 32 können im Wesentlichen nur Abweichungen der Relativposition von Noppen 36 und den Öffnungen 30 beim Erstkontakt in Einführrichtung E ausgeglichen werden.

Bei einer wie in Figur 3 gezeigten Gestaltung der Langlöcher 32 können Abweichungen der Relativposition von Noppen 36 und den Öffnungen 30 beim Erstkontakt sowohl in Breitenrichtung (quer zur Einführrichtung E) als auch in Einführrichtung E ausgeglichen werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Batteriezelle
- 12: Batteriezellgehäuse
- 14: Einschuböffnung
- 16: Batteriezellenpaket
- 18: Außenseite
- 20: Außenseite
- 22: Einschiebehilfsschicht
- 24: Führungsschiene
- 26: Ableiterfähnchen
- 28: Kupplungsstruktur
- 30: Öffnung
- 32: Langloch
- 34: Walz-Kupplungsstruktur
- 36: Noppen
- 38: Antriebswalze
- 40: Montagevorrichtung
- 42: Zusatz-Antriebswalze
- 44: Sollbruchstelle
- 46: Endabschnitt
- 48: Feder
- 50: Einlassventil
- 52: Überdruck-Fluidreservoir
- 54: Auslassventil
- 56: Element
- 58: erste Spule
- 60: zweite Spule
- 62: Dauermagnet

- E: Einführrichtung
- F: Kraft
- P: Pfeil
- R: Einschubrückseite
- Ü: Überstand
- V: Einschubvorderseite

## Patentansprüche

1. Batteriezelle für ein Kraftfahrzeug, umfassend ein Batteriezellgehäuse (12) mit einer Einschuböffnung (14) und mindestens einem in das Batteriezellgehäuse (12) einzuschiebendes Batteriezellenpaket (16),
**dadurch gekennzeichnet,**
**dass** an mindestens einer Außenseite (18, 20) des Zellstapels (16) AntriebsKupplungsstrukturen (28) in Form von sich quer zur Einschubrichtung erstreckenden Erhöhungen und/oder Vertiefungen ausgebildet sind.

2. Batteriezelle nach dem vorstehenden Anspruch, **dadurch gekennzeichnet, dass** an dem Batteriezellenpaket (16) außenseitig mindestens eine Einschiebehilfsschicht (22) ausgebildet ist, wobei die Kupplungsstrukturen (28) an der mindestens einen Einschiebehilfsschicht (22) ausgebildet sind.

3. Batteriezelle nach einem der vorstehenden Ansprüche, **dadurch gekennzeichnet, dass** die mindestens eine Einschiebehilfsschicht (22) als Führungsschiene (24) ausgebildet ist, die fest mit dem Batteriezellenpaket (16) verbunden ist.

4. Batteriezelle nach dem vorstehenden Anspruch, **dadurch gekennzeichnet, dass** die mindestens eine Führungsschiene (24) auf der Einschubrückseite (R) gegenüber der Länge des Zellstapels (16) einen Überstand (Ü) aufweist.

5. Batteriezelle nach dem vorstehenden Anspruch, **dadurch gekennzeichnet, dass** an der Führungsschiene (24) eine Sollbruchstelle (44) ausgebildet ist.

6. Batteriezelle nach einem der vorstehenden Ansprüche, **dadurch gekennzeichnet, dass** als Kupplungsstrukturen (24) eine Vielzahl von Öffnungen (30) ausgebildet sind, die in Einschubrichtung betrachtet in regelmäßigen Abständen (a) angeordnet sind.

7. Batteriezelle nach dem vorstehenden Anspruch, **dadurch gekennzeichnet, dass** eine erste Öffnung (30) im Bereich der Einschubvorderseite (V) als Langloch (32) ausgebildet ist oder die Öffnungen (30) einer ersten Reihe im Bereich der Einschubvorderseite (V) als Langlöcher (32) ausgebildet sind.

8. System aus einer Montagevorrichtung (40) mit mindestens einer Antriebswalze (38) zum Einführen eines Zellstapels (16) in ein Batteriezellgehäuse (12) einer Batteriezelle (10) nach einem der vorstehenden Ansprüche, **dadurch gekennzeichnet, dass** die Antriebswalze (38) über den Umfang verteilt Walzen-Kupplungsstrukturen (34) aufweist, die komplementär zu den Kupplungsstrukturen (28) an dem Batteriezellenpaket (16) ausgebildet sind.

9. System nach dem vorstehenden Anspruch, **dadurch gekennzeichnet, dass** die Walzen-Kupplungsstrukturen (34) derart aus der Antriebswalze (38) herausfahrbar angeordnet sind, dass mittels eines geeigneten Kupplungsstruktur-Antriebs das Herausfahren der Walzen-Kupplungsstrukturen (34) abhängig von der jeweiligen Stellung der Antriebswalze (38) steuerbar ist.

10. Verfahren zum Einführen eines Zellstapels (16) in ein Batteriezellgehäuse (12) nach einem der Ansprüche 1 bis 7 mit Hilfe einer Montagevorrichtung (40), die eine rotierbar gelagerte Antriebswalze (38) mit Walzen-Kupplungsstrukturen (34) aufweist, **dadurch gekennzeichnet, dass** die Walzen-Kupplungsstrukturen(34) mit an dem Batteriezellenpaket (16) ausgebildeten Kupplungsstrukturen (28) beim Rotieren der Antriebswalze (38) derart zusammenwirken, dass das Batteriezellenpaket (16) formschlüssig in das Batteriezellgehäuse (12) eingeschoben wird.
